# EUROPÄISCHE PATENTSCHRIFT

(11) **EP 3 486 444 B1**
(45) Veröffentlichungstag und Bekanntmachung des Hinweises auf die Patenterteilung: **05.01.2022**
(21) Anmeldenummer: 18206971.6
(22) Anmeldetag: 19.11.2018
(51) Int. Cl.: F01N 3/20, F01N 13/00, F01N 11/00, F01N 9/00, F01N 3/035, F01N 3/10

(54) **VERFAHREN ZUR ABGASNACHBEHANDLUNG EINES VERBRENNUNGSMOTORS**
EXHAUST GAS TREATMENT METHOD FOR A COMBUSTION ENGINE
PROCÉDÉ DE TRAITEMENT DE GAZ D'ÉCHAPPEMENT D'UN MOTEUR À COMBUSTION INTERNE

(30) Priorität: 21.11.2017 DE 102017127473
(43) Veröffentlichungstag der Anmeldung: 22.05.2019
(73) Patentinhaber: VOLKSWAGEN AKTIENGESELLSCHAFT, 38440 Wolfsburg (DE)
(72) Erfinder: Gottschling, Martina, 38518 Gifhorn (DE); Wendenburg, Stefan, 38550 Isenbüttel (DE); Nigro, Giampaolo, 38446 Wolfsburg (DE); Schütte, Torsten, 27798 Hude (DE); Brömer, Arne, 38531 Rötgesbüttel (DE)
(74) Vertreter: Gulde & Partner

(56) Entgegenhaltungen:
- DE-A1-102015 000 955
- DE-A1-102015 221 982
- US-A1- 2015 275 730
- Kathrin Anna Fillaus ET AL: "Optimale Auslegung von SCR Katalysatoren unter Real Driving Emissions Bedingungen", , 3 February 2014 (2014-02-03), pages 1-150, XP055760437, Retrieved from the Internet: URL:BMW Motoren GmbH [retrieved on 2020-12-16]

## Beschreibung

Die Erfindung betrifft ein Verfahren zur Abgasnachbehandlung eines Verbrennungsmotors sowie eine Vorrichtung zur Durchführung eines solchen Verfahrens.

Die Erfindung betrifft ein Verfahren zur Abgasnachbehandlung eines Verbrennungsmotors. Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Um nach einem Kaltstart des Verbrennungsmotors die Katalysatoren auf eine Betriebstemperatur zu bringen, ist eine möglichst motornahe Anordnung der Katalysatoren wünschenswert. Dies ist jedoch nicht immer möglich, da der Bauraum begrenzt ist. Daher werden SCR-Katalysatoren und Rußpartikelfilter oftmals in einer motorfernen Unterbodenlage eines Kraftfahrzeuges angeordnet. Es sind motornahe SCR-Systeme bekannt, bei denen ein SCR-Katalysator und ein Rußpartikelfilter über einen Trichter verbunden sind. Durch die Trichtergeometrie wird versucht, den Gegendruck im Abgaskanal zu reduzieren, wodurch jedoch vergleichsweise viel Bauraum benötigt wird oder die Katalysatoren und/oder der Partikelfilter entsprechend kleinvolumig ausgeführt werden müssen, was eine häufigere Regeneration des Partikelfilters erfordert und was den Wirkungsgrad der Abgasreinigung aufgrund des kleineren Volumens begrenzt. Ferner werden zur Abgasreinigung sogenannte NOx-Speicherkatalysatoren verwendet, um die bei der Verbrennung des Kraftstoff-Luft-Gemischs in den Brennräumen des Verbrennungsmotors entstehenden Stickoxide aufzunehmen. Diese NOx-Speicherkatalysatoren müssen jedoch periodisch durch einen unterstöchiometrischen Betrieb regeneriert werden, was zu einem erhöhten Kraftstoffverbrauch führt. Ein weiterer Nachteil von NOx-Speicherkatalysatoren ist, dass bei hohen Abgastemperaturen keine Stickoxide in dem NOx-Speicherkatalysator eingelagert werden können. Zudem sind NOx-Speicherkatalysatoren alterungsanfällig, sodass die Speicherkapazität mit der Lebenszeit des NOx-Speicherkatalysators deutlich abnimmt. Zur Kompensation der Alterungsneigung sind große Katalysatorvolumina und entsprechend hohe Edelmetallmengen notwendig, was entsprechende Nachteile bei dem Bauraumbedarf und den Kosten mit sich bringt.

Katalysatoren zur selektiven katalytischen Reduktion von Stickoxiden, welche im Folgenden als SCR-Katalysatoren bezeichnet werden, haben den Nachteil, dass eine spürbare Konvertierung von Stickoxiden erst ab einer Temperatur von ca. 170°C einsetzt. Der zur Reduktion der Stickoxide eingesetzte Ammoniak, welcher in der Regel aus einer wässrigen Harnstofflösung gewonnen wird, oxidiert bei Temperaturen oberhalb von 400°C, sodass oberhalb dieser Temperatur ebenfalls nur eine geringe Konvertierung von schädlichen Stickoxiden mittels des SCR-Katalysators möglich ist. Zudem besteht bei Motoren mit einer Niederdruckabgasrückführung die Gefahr, dass das Reduktionsmittel in die Abgasrückführung gelangt, und dort bei niedrigen Temperaturen an den Wänden des Abgaskanals anlagert. Dabei kristallisiert der Harnstoff aus der wässrigen Harnstofflösung aus, was zu Ablagerungen an den Wänden des Abgaskanals der Niederdruckabgasrückführung führen kann, welche die Funktion der Abgasrückführung einschränken können.

Aus der DE 10 2015 221 982 A1 ist ein Verfahren zum Betreiben eines SCR-Kataysatorsystems in der Abgasanlage eines Verbrennungsmotors bekannt. Das SCR-Katalysatorsystem umfasst mindestens zwei SCR-Katalysatoren und zwei Dosierventile für ein Reduktionsmittel. Dabei wird in Abhängigkeit von einem Betriebszustand des SCR- Katalysatorsystems wahlweise durch das erste Dosierventil oder durch das zweite Dosierventil eingespritzt.

Die DE 10 2015 000 955 A1 offenbart ein System und ein Verfahren zur Minderung der Stickoxidemissionen in der Abgasanlage eines Verbrennungsmotors. Dabei werden die Stickoxidemissionen und HC-Emissionen bei niedrigen Abgastemperaturen eingespeichert und bei höheren Temperaturen freigesetzt und anschließend konvertiert.

Aus der US 2015 / 275 730 A1 ist ein Abgasnachbehandlungssystem mit zwei SCR-Katalysatoren und zwei Dosierventilen zur Eindosierung eines Reduktionsmittels bekannt. Dabei wird die Eindosierung von dem ersten Dosierventil auf das zweite Dosierventil umgeschaltet, wenn die Temperatur des ersten SCR-Katalysators eine definierte Temperatur übersteigt.

Der Erfindung liegt nun die Aufgabe zugrunde, eine möglichst effiziente und effektive Umsetzung der Stickoxide bei einer Abgasanlage mit zwei Dosiermodulen zur Eindosierung von Reduktionsmittel zu ermöglichen.

Erfindungsgemäß wird diese Aufgabe durch ein Verfahren zur Abgasnachbehandlung eines Verbrennungsmotors mit einer Abgasanlage gelöst, in welcher in einer motornahen Position ein erster SCR-Katalysator angeordnet ist, welchem ein erstes Dosiermodul zur Eindosierung eines für die selektive katalytische Reduktion von Stickoxiden notwendigen Reduktionsmittels zugeordnet ist. Ferner ist in der Abgasanlage in einer motorfernen Position stromabwärts des ersten SCR-Katalysators ein zweiter SCR-Katalysator angeordnet, dem ein zweites Dosiermodul zur Eindosierung von Reduktionsmittel zugeordnet ist. Das erfindungsgemäße Verfahren umfasst folgende Schritte:
- Ermitteln oder Berechnen mindestens einer Temperatur in der Abgasanlage des Verbrennungsmotors,
- Ermitteln des Beladungszustandes der Ammoniakbeladung der beiden SCR-Katalysatoren,
- Eindosieren von Reduktionsmittel durch das erste Dosiermodul und/oder das zweite Dosiermodul in Abhängigkeit der Ammoniakbeladung der SCR-Katalysatoren und der Temperatur in der Abgasanlage.

Dabei wird unter einer motornahen Position eine Position in der Abgasanlage mit einem mittleren Abgaslaufweg von höchstens 80 cm, insbesondere von höchstens 50 cm, nach dem Auslass des Verbrennungsmotors verstanden. Eine motorferne Position findet sich insbesondere in einer Unterbodenlage eines Kraftfahrzeuges und weist einen mittleren Abgaslaufweg von mindestens 80 cm, vorzugsweise von mindestens 100 cm nach dem Auslass des Verbrennungsmotors auf. Durch zwei unterschiedliche SCR-Katalysatoren, welche in unterschiedlichen Abständen zu dem Auslass des Verbrennungsmotors angeordnet sind, herrschen an beiden SCR-Katalysatoren unterschiedliche Temperaturen vor. Somit ist es möglich, mindestens eine der SCR-Katalysatoren in einem Temperaturfenster zu betreiben, in dem eine besonders effiziente Umsetzung von Stickoxiden in elementaren Stickstoff möglich ist. Es ist darüber hinaus möglich, den zweiten SCR-Katalysator in zwei Bricks zu unterteilen. Durch die Anordnung des ersten Bricks in der vorderen Unterbodenabgasanlage und des zweiten Bricks in der hinteren Unterbodenabgasanlage kann der Aktivitätsbereich der Abgasanlage weiter vergrößert werden. Das vorgeschlagene Verfahren ermöglicht eine Dosierstrategie, mit der eine bestmögliche Konvertierung von Stickoxid-Emissionen ermöglicht wird und welche auf eine Mehrfachdosierung von Reduktionsmittel ideal ausgelegt wird. Dabei sollen die Abgasemissionen gesenkt und der Einsatz des Reduktionsmittels minimiert werden. Ferner sollen Ablagerungen in der Niederdruckabgasrückführung, welche aus einem Auskristallisieren von Reduktionsmittel resultieren, vermieden oder zumindest stark vermindert werden. Die Dosierstrategie ist so ausgelegt, dass die SCR-Katalysatoren mit Ammoniak vorbeladen werden, sodass die SCR-Katalysatoren mit dem Reduktionsmittel vorbeladen sind, um eine möglichst effiziente Umsetzung der Stickoxide im Abgas zu ermöglichen.

Durch die in den abhängigen Ansprüchen aufgeführten Merkmale sind vorteilhafte Verbesserungen und Weiterbildungen des im unabhängigen Anspruch angegebenen Verfahrens zur Abgasnachbehandlung möglich.

Erfindungsgemäß ist vorgesehen, dass in einem Steuergerät des Verbrennungsmotors mindestens eine der im Folgenden beschriebenen verschiedenen Dosierstrategien zur Eindosierung des Reduktionsmittels abgelegt ist. Durch unterschiedliche Dosierstrategien können die Emissionen oder der Einsatz von Reduktionsmittel auf vorteilhafte Weise minimiert werden. Ferner kann verhindert werden, dass Reduktionsmittel über die Niederdruckabgasrückführung in die Brennräume des Verbrennungsmotors gelangt. Erfindungsgemäß ist vorgesehen, dass eine erste Dosierstrategie für das Reduktionsmittel vorgesehen ist, bei der ein möglichst hoher Umsatz von Stickoxiden in molekularen Stickstoff durch den ersten SCR-Katalysator erreicht wird. Dabei kann bei niedrigen Lasten sichergestellt werden, dass der erste SCR-Katalysator die zur Konvertierung der Stickoxide notwendige Temperatur aufweist und somit kurzfristig nach einem Kaltstart des Verbrennungsmotors zur effizienten Minimierung der Stickoxid-Emissionen genutzt werden kann. Bevorzugt ist dabei, wenn dem ersten SCR-Katalysator ein NOx-Speicherkatalysator vorgeschaltet ist, da der NOx-Speicherkatalysator bereits zur Konvertierung der Stickoxide beitragen kann, bevor der erste SCR-Katalysator die zur Konvertierung notwendige Mindesttemperatur von etwa 170°C erreicht hat.

Erfindungsgemäß wird in einem ersten Betriebszustand des Verbrennungsmotors bei niedriger Motorlast ausschließlich durch das erste Dosiermodul stromaufwärts des ersten SCR-Katalysators Reduktionsmittel in den Abgaskanal eindosiert, wenn eine Ammoniaksollbeladung des ersten SCR-Katalysators unterschritten wird. Bei sehr niederlastigen Fahrten, insbesondere bei niederlastigem Stadtverkehr erreicht der zweite SCR-Katalysator nur stark zeitverzögert das Temperaturfenster, in dem eine effiziente Konvertierung von Stickoxiden möglich ist. Daher ist es in diesem Lastbereich vorteilhaft, wenn die Eindosierung von Reduktionsmittel ausschließlich durch das erste Dosiermodul erfolgt.

Besonders bevorzugt ist dabei, dass die Ammoniaksollbeladung des ersten SCR-Katalysators bei mindestens 50 %, vorzugsweise zwischen 50 % und 95 %, insbesondere zwischen 70 % und 90 % liegt. Durch eine rechtzeitige Eindosierung von Reduktionsmittel kann eine entsprechende Vorbeladung des ersten SCR-Katalysators, insbesondere eines Partikelfilters mit einer Beschichtung zur selektiven, katalytischen Reduktion von Stickoxiden, mit Ammoniak erreicht werden, sodass Stickoxide im Abgas des Verbrennungsmotors in unschädliche Abgaskomponenten konvertiert werden können.

Erfindungsgemäß ist vorgesehen, dass in einem zweiten Betriebszustand des Verbrennungsmotors, insbesondere bei mittlerer Motorlast, beispielsweise bei dynamischer Stadtfahrt oder gemäßigter Überlandfahrt, sowohl durch das erste Dosiermodul als auch durch das zweite Dosiermodul derart Reduktionsmittel eindosiert wird, dass beide SCR-Katalysatoren eine definierte Ammoniakbeladung erreichen. Auch in diesem Fall wird eine Vorbeladung der SCR-Katalysatoren von mindestens 50 % der einspeicherbaren Ammoniakmenge, insbesondere von 70 % bis 90 % der maximal einspeicherbaren Ammoniakmenge, angestrebt. Eine höhere Beladung bietet die potenzielle Gefahr, dass bei einem plötzlichen Temperaturanstieg Ammoniak freigesetzt werden kann und somit die Endrohremissionen des Kraftfahrzeuges steigen. Durch eine Vorbeladung kann mit geringem Reduktionsmitteleinsatz sichergestellt werden, dass hinreichend viel Ammoniak zur Konvertierung der Stickoxide im Abgas auf dem jeweiligen SCR-Katalysator vorhanden ist. Dabei kann die Eindosierung des Reduktionsmittels durch die beiden Dosiermodule durch gleichzeitige, aufeinanderfolgende oder abwechselnde Ansteuerung der Dosiermodule erfolgen.

Erfindungsgemäß ist vorgesehen, dass in einem dritten Betriebszustand des Verbrennungsmotors, insbesondere bei einem Betriebspunkt des Verbrennungsmotors mit hohen Abgasmassenströmen und/oder hoher Abgastemperatur, beispielsweise bei höherlastiger Überlandfahrt, Autobahnfahrt oder Fahrten im Gebirge, die Ammoniakbeladung des zweiten SCR-Katalysators über das zweite Dosiermodul geregelt wird. Mit steigender Motorlast steigen die Temperaturen an dem ersten und dem zweiten Dosiermodul. Zudem wird bei einem größeren Abgasvolumen ein verstärkter Einsatz von Reduktionsmittel notwendig. Um ein unerwünschtes Eindringen von Reduktionsmittel in die Niederdruckabgasrückführung zu vermeiden, wird in diesem Betriebszustand verstärkt Reduktionsmittel durch das zweite Dosiermodul stromabwärts der Verzweigung der Niederdruckabgasrückführung in den Abgaskanal eindosiert. Dabei kommt es aufgrund der hohen Abgastemperaturen und/oder der hohen Raumgeschwindigkeiten zu einer Verschlechterung der NOx-Konvertierung durch den ersten SCR-Katalysator.

In einer weiteren Verbesserung des Verfahrens ist vorgesehen, dass nur dann auf eine ausschließliche Eindosierung von Reduktionsmittel durch das zweite Dosiermodul umgeschaltet wird, wenn die Abgastemperatur T_{EG} oberhalb einer zweiten Schwellentemperatur T_{S2} liegt. Bei einem Volllastbetrieb oder einer Regeneration des Partikelfilters treten an dem ersten SCR-Katalysator so hohe Temperaturen auf, dass eine selektive, katalytische Reduktion von Stickoxiden durch diesen ersten SCR-Katalysator kaum noch möglich oder gänzlich unmöglich ist. Daher wird in einem solchen Betriebszustand das Reduktionsmittel vorzugsweise ausschließlich durch das zweite Dosiermodul eindosiert und die Stickoxide durch den zweiten SCR-Katalysator konvertiert.

Gemäß einer weiteren Verbesserung des Verfahrens ist vorgesehen, dass in der Abgasanlage mehrere Temperaturen ermittelt oder berechnet werden, wobei bei Überschreiten einer zweiten Schwellentemperatur die Eindosierung des Reduktionsmittels von dem motornahen Dosiermodul auf das motorferne Dosiermodul umgeschaltet wird. Wird im Betrieb des Verbrennungsmotors festgestellt, dass die Abgastemperatur und/oder die Bauteiltemperatur eines motornahen SCR-Katalysators über einen Schwellenwert ansteigt, so wird die Eindosierung von Reduktionsmittel an dem diesem motornahen SCR-Katalysator zugeordneten Dosiermodul zurückgefahren und es erfolgt eine Eindosierung an einem in der Abgasanlage weiter stromabwärts angeordneten Dosiermodul, da die Abgastemperatur mit zunehmender Abgaslauflänge und größerem Abstand von dem Auslass des Verbrennungsmotors abnimmt. Insbesondere wird bei Überschreiten dieser zweiten Schwellentemperatur auf das motorferne zweite Dosiermodul gewechselt. Dadurch kann der Reduktionsmitteleinsatz minimiert werden, sodass ein selteneres Nachfüllen von Reduktionsmittel notwendig ist.

Erfindungsgemäß ist vorgesehen, dass eine Eindosierung des Reduktionsmittels in Abhängigkeit des Wirkungsgrades des Reduktionsmitteleinsatzes erfolgt. Durch die Ermittlung eines Wirkungsgrades des jeweiligen SCR-Katalysators kann der Reduktionsmitteleinsatz minimiert werden.

Erfindungsgemäß wird dabei für den ersten SCR-Katalysator und den zweiten SCR-Katalysator jeweils Konvertierungsgrade in einem Kennfeld des Steuergeräts des Verbrennungsmotors abgelegt werden, die abhängig von einem NOx-Massenstrom im Abgas, der Abgastemperatur, der Raumgeschwindigkeit, des Alterungszustands des Katalysators und der eindosierten Reduktionsmittelmenge sind. Dabei kann Kennfeld-basiert jeweils das Dosiermodul angesteuert werden, welches eine möglichst effiziente Umsetzung der Stickoxide im Abgas erwarten lässt. Somit können die SCR-Katalysatoren jeweils an ihrem Punkt der maximalen Effizienz betrieben werden, sodass sich der Reduktionsmitteleinsatz verringern lässt.

Erfindungsgemäß ist vorgesehen, dass bei geöffnetem Niederdruck-Abgasrückführungsventil gegenüber einem Betrieb mit geschlossenem Niederdruck-Abgasrückführungsventil die Einspritzmenge des über das erste Dosiermodul eindosierten Reduktionsmittels verringert wird. Dadurch kann eine Versottung der Niederdruckabgasrückführung, insbesondere ein Ausfall des Niederdruck-Abgasrückführungsventils, verhindert werden, da kein Reduktionsmittel oder zumindest deutlich weniger Reduktionsmittel in die Niederdruckabgasrückführung gelangt und die Gefahr von Ablagerungen oder Versottungen somit verringert wird.

In einer vorteilhaften Ausführungsform des Verfahrens ist vorgesehen, dass auf eine Eindosierung von Reduktionsmittel durch das erste Dosiermodul verzichtet wird, wenn eine hinreichende Reduzierung der Stickoxide durch den zweiten SCR-Katalysator sichergestellt ist. Da der erste SCR-Katalysator, insbesondere ein Partikelfilter mit SCR-Beschichtung über die Lebenszeit größeren Alterungseffekten ausgesetzt ist, ist es vorteilhaft, diesen ersten SCR-Katalysator abzukoppeln, wenn eine hinreichende Umsetzung von Stickoxiden durch den zweiten SCR-Katalysator sichergestellt ist.

In einer weiteren vorteilhaften Ausführungsform des Verfahrens ist vorgesehen, dass basierend auf einer Änderung der Fahrpedalstellung eine vorausschauende Anpassung der Eindosierung von Reduktionsmittel durch das erste Dosiermodul und/oder das zweite Dosiermodul erfolgt. Dadurch kann die Dosier-Strategie zeitnah an eine vorgesehene Laständerung des Verbrennungsmotors angepasst werden, sodass eine optimale und maximal effiziente Abgasnachbehandlung möglich ist.

Erfindungsgemäß wird eine Vorrichtung zur Abgasnachbehandlung eines Verbrennungsmotors vorgeschlagen. Dabei ist der Verbrennungsmotor mit seinem Auslass mit einer Abgasanlage des Verbrennungsmotors, vorzugsweise mit einer Abgasanlage eines Kraftfahrzeuges, verbunden. In der Abgasanlage ist in einer motornahen Position ein erster SCR-Katalysator angeordnet, dem ein erstes Dosiermodul zur Eindosierung eines für die selektive katalytische Reduktion von Stickoxiden notwendigen Reduktionsmittels zugeordnet ist. Ferner ist in der Abgasanlage in einer motorfernen Position, insbesondere in einer Unterbodenposition eines Kraftfahrzeuges ein zweiter SCR-Katalysator angeordnet, dem ein zweites Dosiermodul zugeordnet ist. Der Vorrichtung ist ein Steuergerät zur Steuerung der Einspritzmenge an Reduktionsmittel zugeordnet, welches dazu eingerichtet ist, ein erfindungsgemäßes Verfahren zur Abgasnachbehandlung durchzuführen, wenn ein maschinenlesbarer Programmcode auf dem Steuergerät ausgeführt wird. Durch eine solche Vorrichtung kann das erfindungsgemäße Verfahren an einem Dieselmotor auf einfache Art und Weise realisiert werden.

Die Dosiersysteme zur Eindosierung des Reduktionsmittels können sowohl als luftunterstützte Dosiersysteme ausgeführt werden, bei denen eine Zerstäubung des Reduktionsmittels mithilfe von Druckluft erfolgt, als auch durch eine Druckzerstäubung, bei welcher der Druckunterschied zwischen dem Druck im Dosiermodul und dem Druck in der Abgasanlage zur Zerstäubung des Reduktionsmittels genutzt wird. Die Erfindung ist insbesondere für selbstzündende Verbrennungsmotoren nach dem Dieselprinzip vorgesehen, kann aber auch für fremdgezündete Verbrennungsmotoren nach dem Ottoprinzip genutzt werden.

In bevorzugter Ausführung der Vorrichtung ist vorgesehen, dass das erste Dosiermodul stromabwärts einer Turbine eines Abgasturboladers des Verbrennungsmotors angeordnet ist und das zweite Dosiermodul im Abgaskanal stromabwärts der Verzweigungsstelle angeordnet ist. Dadurch kann das Reduktionsmittel an unterschiedlichen heißen Abschnitten der Abgasanlage eindosiert werden, sodass die Gefahr einer thermischen Zersetzung, insbesondere einer Oxidation von Ammoniak, reduziert werden kann.

Zudem wird die Wahrscheinlichkeit erhöht, dass zumindest einer der SCR-Katalysatoren eine Temperatur aufweist, welche in einem Temperaturfenster zwischen 170°C und 400°C liegt, in dem eine besonders effiziente Konvertierung von Stickoxiden durch den SCR-Katalysator möglich ist. Durch die Anordnung des zweiten Dosiermoduls stromabwärts der Verzweigungsstelle für die Niederdruckabgasrückführung wird die Gefahr reduziert, dass Reduktionsmittel in die Abgasleitung der Niederdruckabgasrückführung eindringt und dort zu einer Versottung der Abgasleitung führt oder es zu Ablagerungen an einem in der Niederdruckabgasrückführung angeordneten Abgasrückführungsventil kommt.

Gemäß einer weiteren vorteilhaften Weiterbildung der Erfindung ist vorgesehen, dass zumindest einer der SCR-Katalysatoren, insbesondere der erste SCR-Katalysator, als ein Partikelfilter mit einer Beschichtung zur selektiven katalytischen Reduktion von Stickoxiden ausgeführt ist. Um neben der effizienten Konvertierung von Stickoxiden Rußpartikel aus dem Abgas zu entfernen, ist neben der Verwendung mehrerer SCR-Katalysatoren der Einsatz eines Partikelfilters zweckmäßig. Um den Bauraumbedarf bei zwei oder mehr SCR-Katalysatoren und einem Partikelfilter in Grenzen zu halten, ist es sinnvoll, mindestens einen SCR-Katalysator, vorzugsweise den ersten, motornahen SCR-Katalysator, als Partikelfilter mit einer Beschichtung zur selektiven katalytischen Reduktion von Stickoxiden auszubilden, um nicht noch ein weiteres Bauteil in die Abgasanlage integrieren zu müssen. Eine motornahe Positionierung des Partikelfilters mit der SCR-Beschichtung ist sinnvoll, da die Temperatur zur Regeneration des im Partikelfilter zurückgehaltenen Rußes oberhalb der Temperatur für eine maximal effiziente Reduktion der Stickoxid-Emissionen liegt und daher zum Aufheizen des Partikelfilters eine motornahe Position günstiger ist.

Besonders bevorzugt ist dabei, wenn der Diesel-Oxidationskatalysator oder der NOx-Speicherkatalysator in der Abgasanlage stromaufwärts des ersten SCR-Katalysators und stromaufwärts des ersten Dosiermoduls angeordnet ist. Durch eine Anordnung in einer motornahen Position stromaufwärts des ersten SCR-Katalysators wird nach einem Kaltstart ein schnelles Aufwärmen des Diesel-Oxidationskatalysators oder des NOx-Speicherkatalysators auf eine Betriebstemperatur erleichtert. NOx-Speicherkatalysatoren haben den Vorteil, dass sie bei niedrigeren Abgastemperaturen im Vergleich zu SCR-Katalysatoren Stickoxide konvertieren können. Allerdings müssen NOx-Speicherkatalysatoren periodisch durch einen unterstöchiometrischen Betrieb des Verbrennungsmotors regeneriert werden, was zu einem erhöhten Kraftstoffverbrauch führt.

Zusätzlich kann stromabwärts des zweiten SCR-Katalysators ein Ammoniak-Sperrkatalysator vorgesehen sein, um Ammoniakschlupf und damit verbundenen unerwünschte Ammoniakemissionen zu vermeiden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erstes Ausführungsbeispiel eines Verbrennungsmotors mit einer erfindungsgemäßen Vorrichtung zur Abgasnachbehandlung;
- Figur 2: ein Ablaufdiagramm für eine frontbasierte Dosierstrategie, bei der eine größtmögliche Umsetzung von Stickoxiden über den ersten SCR-Katalysator angestrebt wird; und
- Figur 3: ein Ablaufdiagramm zur Durchführung eines erfindungsgemäßen Verfahrens zur Abgasnachbehandlung eines Verbrennungsmotors mit einer Reduktionsmittelverbrauch optimierten Dosierstrategie.

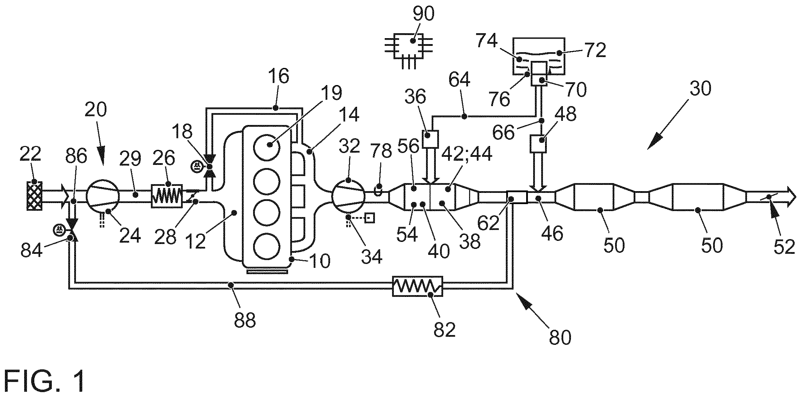

Figur 1 zeigt einen Verbrennungsmotor 10 mit einem Luftversorgungssystem 20 und einer Abgasanlage 30. Der Verbrennungsmotor 10 weist eine Mehrzahl von Brennräumen 19 auf, in denen ein Kraftstoff-Luft-Gemisch verbrannt wird. Der Verbrennungsmotor 10 weist einen Einlass 12 auf, welcher mit dem Luftversorgungssystem 20 verbunden ist. Der Verbrennungsmotor 10 weist ferner einen Auslass 14 auf, welcher mit der Abgasanlage 30 verbunden ist. An dem Verbrennungsmotor 10 ist eine Hochdruckabgasrückführung 16 vorgesehen, welche den Auslass 14 mit dem Einlass 12 verbindet. In der Hochdruckabgasrückführung 16 ist ein Abgasrückführungsventil 18 angeordnet, mit welchem die Menge an zurückgeführtem Abgas gesteuert werden kann.

Das Luftversorgungssystem 20 umfasst einen Luftfilter 22, welcher an einem Frischluftkanal 29 angeordnet ist. Stromabwärts des Luftfilters 22 ist ein Verdichter 24 eines Abgasturboladers 32 angeordnet, welcher die Frischluft verdichtet. Weiter stromabwärts des Verdichters 24 ist in dem Frischluftkanal 29 ein Ladeluftkühler 26 vorgesehen, welcher die verdichtete Frischluft abkühlt und somit die Füllung der Brennräume 19 weiter verbessert. Stromabwärts des Ladeluftkühlers 26 kann eine Drosselklappe 28 angeordnet werden, um die den Brennräumen 19 des Verbrennungsmotors 10 zugeführte Luftmenge zu steuern.

Die Abgasanlage 30 weist einen Abgaskanal 46 auf, in dem in Strömungsrichtung eines Abgases des Verbrennungsmotors 10 durch den Abgaskanal 46 eine Turbine 34 des Abgasturboladers 32 und stromabwärts der Turbine 34 eine Mehrzahl von Katalysatoren 38, 40, 50, 54, angeordnet ist. Als erste Abgasnachbehandlungskomponente ist in dem Abgaskanal 46 ein motornaher Diesel-Oxidationskatalysator 54 angeordnet, welcher einem motornahen Partikelfilter 42 mit einer Beschichtung 44 zur selektiven katalytischen Reduktion von Stickoxiden vorangestellt ist. Der Partikelfilter 42 mit der Beschichtung 44 stellt einen ersten SCR-Katalysator 38 zur selektiven katalytischen Reduktion von Stickoxiden dar. Stromabwärts des Diesel-Oxidationskatalysators 54 und stromaufwärts des Partikelfilters 42 mit der Beschichtung 44 zur selektiven, katalytischen Reduktion von Stickoxiden ist ein erstes Dosiermodul 36 zur Eindosierung eines Reduktionsmittels 74 in dem Abgaskanal 46 angeordnet. Stromabwärts des Partikelfilters 42 liegt eine Verzweigungsstelle 62, an der eine Niederdruck-Abgasrückführung 80 aus dem Abgaskanal 46 der Abgasanlage 30 abzweigt. Stromabwärts der Verzweigungsstelle 62 ist im Abgaskanal 46 ein zweites Dosiermodul 48 angeordnet, mit welchem Reduktionsmittel 74 stromaufwärts eines zweiten SCR-Katalysators 50 in den Abgaskanal 46 eindosiert werden kann. Stromabwärts des zweiten SCR-Katalysators 50 ist im Abgaskanal 46 eine Abgasklappe 52 angeordnet, mit welcher der Abgaskanal 46 zumindest teilweise verschlossen werden kann und auf diese Weise die über die Niederdruckabgasrückführung 80 in das Luftversorgungssystem 20 zurückgeführte Abgasmenge gesteuert werden kann. Das erste Dosiermodul 36 ist über eine erste Reduktionsmittelleitung 64 mit einem Fördermodul 70 fluidisch verbunden. Das zweite Dosiermodul 48 ist über eine zweite Reduktionsmittelleitung 66 ebenfalls mit dem Fördermodul 70 fluidisch verbunden, wobei das Fördermodul 70 das Reduktionsmittel 74 aus einem Reduktionsmitteltank 72 dem jeweiligen Dosiermodul 36, 48 zur Verfügung stellt. An dem Fördermodul 70 und/oder an dem Reduktionsmitteltank 74 ist eine Heizung 76 angeordnet, mit der das Reduktionsmittel 74 bei kalten Außentemperaturen, insbesondere bei Temperaturen unter -10°C beheizt und gegebenenfalls aufgetaut werden kann. An dem Abgaskanal 46 ist ferner mindestens ein Temperatursensor 78 angeordnet, um eine Abgastemperatur T_{EG} oder Bauteiltemperatur einer Komponente zur Abgasnachbehandlung zu ermitteln. Auf Basis dieser Temperatur und/oder des aktuellen Betriebszustandes des Verbrennungsmotors 10 können in einem Steuergerät 90 dann weitere Temperaturen im Abgaskanal 46, insbesondere die Temperaturen des ersten SCR-Katalysators 38 und des zweiten SCR-Katalysators 50, berechnet werden. Alternativ kann auch an jedem der SCR-Katalysatoren 38, 50 ein Temperatursensor 78 angeordnet sein, um die Temperatur des jeweiligen SCR-Katalysators 38, 50 zu ermitteln. Alternativ oder zusätzlich zu dem Dieseloxidationskatalysator 54 kann in der Abgasanlage stromaufwärts des Partikelfilters 42 auch ein NOx-Speicherkatalysator 56 angeordnet sein.

Die Niederdruckabgasrückführung 80 umfasst eine Abgasleitung 88, in der in Strömungsrichtung eines Abgases durch die Abgasleitung 88 ein Abgaskühler 82 und stromabwärts des Abgaskühlers 82 ein Abgasrückführungsventil 84 zur Steuerung der dem Luftversorgungssystem 20 zugeführten Abgasmenge angeordnet sind. Die Abgasleitung entspringt an der Verzweigungsstelle 62 aus dem Abgaskanal 46 und mündet an der Einmündung 86 in den Frischluftkanal 29.

Durch die in Figur 1 dargestellte Vorrichtung zur Abgasnachbehandlung ist eine Mehrfachdosierung von Reduktionsmittel 74 in die Abgasanlage 30 möglich. Dabei ist vorgesehen, das Reduktionsmittel bei kaltem Verbrennungsmotor 10 sehr motornah, dicht nach dem Auslass 14 des Verbrennungsmotors 10 einzudosieren und mit dem motornahen ersten SCR-Katalysator 38 schädliche Stickoxide in ungiftigen molekularen Stickstoff und Wasserdampf zu konvertieren. Motorfern ist das zweite Dosiermodul 48 angeordnet und zwar so, dass die Abgastemperatur T_{EG} durch den Abstand zum Auslass 14 des Verbrennungsmotors 10 niedriger ist und damit eine Konvertierung für mittlere bis hohe Lasten des Verbrennungsmotors 10 ermöglicht wird, ohne dass Ammoniak NH₃ direkt in hohem Maße oxidiert wird.

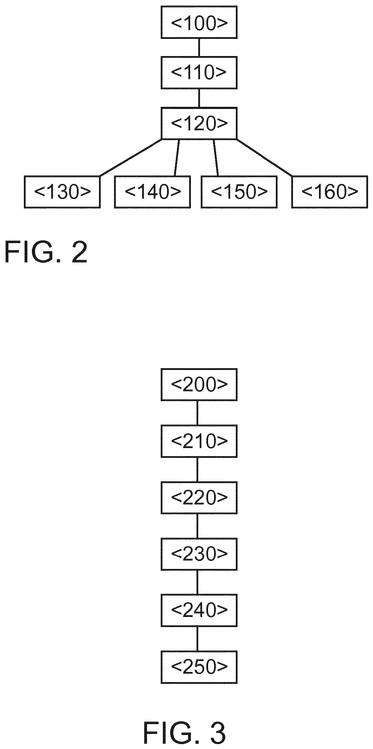

In Figur 2 ist ein Ablaufdiagramm zu einem erfindungsgemäßen Verfahren zur Abgasnachbehandlung dargestellt. In einem ersten Verfahrensschritt <100> wird mindestens eine Temperatur T in der Abgasanlage 30 ermittelt oder berechnet, aus der dann weitere Temperaturen, insbesondere die Bauteiltemperaturen der SCR-Katalysatoren 38, 50 berechnet werden können. Alternativ können die Temperaturen T₁, T₂, der SCR-Katalysatoren durch an dem jeweiligen SCR-Katalysator 38, 50 angeordnete Temperatursensoren 78 gemessen werden. In einem Verfahrensschritt <110> wird die ermittelte Temperatur mit einer Schwellentemperatur T_{S0} verglichen, und eine Eindosierung von Reduktionsmittel 74 unterbunden, wenn die Temperatur T unterhalb dieser Schwellentemperatur T_{S0} für den Reduktionsmitteleinsatz liegt. In einem Verfahrensschritt <120> wird der aktuelle Lastzustand des Verbrennungsmotors 10 ermittelt, wobei in Abhängigkeit des Lastzustands eine Eindosierung von Reduktionsmittel 74 durch das erste Dosiermodul 36, das zweite Dosiermodul 48 oder beide Dosiermodule 36, 48 erfolgt. Dabei wird in einem ersten Betriebszustand des Verbrennungsmotors, insbesondere bei einer niederlastigen Stadtfahrt in einem Verfahrensschritt <130> ausschließlich Reduktionsmittel 74 durch das erste Dosiermodul 36 eindosiert.

Alternativ wird in einem Verfahrensschritt <140> bei einem zweiten Betriebszustand, bei dem die Motorlast höher als bei dem ersten Betriebszustand liegt, beispielsweise bei einer dynamischen Stadtfahrt oder einer moderaten Überlandfahrt, Reduktionsmittel 74 sowohl durch das erste Dosiermodul 36 als auch durch das zweite Dosiermodul 48 in die Abgasanlage 30 eindosiert. Dabei befinden sich sowohl der erste SCR-Katalysator 38 als auch der zweite SCR-Katalysator 50 in umsatzgünstigen Betriebsbereichen, sodass mittels zeitgleicher, aufeinander folgender oder abwechselnder Ansteuerung der Dosiermodule 36, 48 die Ammoniaksollfüllstände erreicht werden.

Ferner wird alternativ in einem dritten Betriebszustand, bei dem die Motorlast des Verbrennungsmotors 10 höher als in den beiden vorausgegangenen Betriebszuständen liegt, in einem Verfahrensschritt <150> durch beide Dosiermodule 36, 48 Reduktionsmittel 74 in die Abgasanlage 30 eindosiert. Bei Betriebspunkten des Motors mit hohen Abgasmassenströmen und/oder hoher Abgastemperatur (höherlastige Landstraßenfahrt, Autobahn, Bergfahrten, Fahrten mit hoher Last) kommt es aufgrund der hohen Raumgeschwindigkeit und/oder hoher Temperatur zu einer Verschlechterung der NOx-Konvertierung über den ersten SCR-Katalysator 38. In diesem Fall wird der Füllstand des zweiten SCR-Katalysators 50 über eine Dosierung von Reduktionsmittel 74, insbesondere von wässriger Harnstofflösung, mit dem zweiten Dosiermodul 48 geregelt. In einem vierten Betriebszustand des Verbrennungsmotors 10, insbesondere bei einer Regeneration des Partikelfilters 42, wird in einem Verfahrensschritt <160> ausschließlich Reduktionsmittel 74 durch das zweite Dosiermodul 48 in die Abgasanlage 30 eindosiert. Wegen der auftretenden hohen Abgastemperaturen im ersten SCR-Katalysator 38 verschlechtert sich der NOx-Wirkungsgrad über den ersten SCR-Katalysator 38 massiv. Bei der Reduktionsmittel-Dosierung über das motornahe erste Dosiermodul 36 kommt es zu einer erhöhten Ammoniakoxidation, welche mit einem erhöhten Reduktionsmittelverbrauch einhergeht. Daher wird in diesem Fall das Reduktionsmittel 74 vorzugsweise über das zweite Dosiermodul 48 in die Abgasanlage 30 eindosiert.

In Figur 3 ist ein weiteres Ablaufdiagramm für eine Dosierstrategie zur Eindosierung von Reduktionsmittel 74 in die Abgasanlage 30 dargestellt. Bei der Reduktionsmittelverbrauchsoptimierten Dosierstrategie wird der Dosierschwerpunkt in Abhängigkeit des Wirkungsgrads des Reduktionsmittel-Einsatzes festgelegt. Aufgrund der Niederdruckabgasrückführung 80 strömt ein höherer Abgasmassenstrom über den ersten SCR-Katalysator 38 als über Unterboden-SCR-Katalysator 50, sodass bei aktiver Niederdruckabgasrückführung 80 ein höherer Reduktionsmittel-Verbrauch für eine vergleichbare Konvertierungsleistung über den ersten, motornahen SCR-Katalysator 38 erforderlich ist als über den Unterboden-SCR-Katalysator 50. Für eine verbrauchsoptimierte Dosierstrategie werden für den ersten SCR-Katalysator 38 und den Unterboden-SCR-Katalysator 50 Konvertierungsgrade in Kennfeldern abgelegt, die abhängig von dem NOx-Massenstrom im Abgas, der Temperatur, der Raumgeschwindigkeit, des Alterungszustands des Katalysators und der Reduktionsmittel-Dosiermenge sind. Ein Optimierer kann mithilfe dieser Kennfelder eine verbrauchsoptimale Aufteilung der Konvertierung auf dem ersten SCR-Katalysator 38 und dem zweiten SCR-Katalysator 50 ermitteln und damit die erforderlichen Reduktionsmittel-Mengen für die Dosiermodule 36, 48 festlegen. Damit kann eine Strategie umgesetzt werden, bei der eine gezielte Füllstandsabsenkung des Ammoniaks auf dem ersten SCR-Katalysator 38 vorgenommen wird beziehungsweise auf eine Eindosierung von Reduktionsmittel 74 vor dem ersten SCR-Katalysator 38 komplett verzichtet wird, wenn über den Unterboden-SCR-Katalysator 50 die erforderliche NOx-Reduktion sichergestellt ist. Wenn die erforderliche NOx-Reduzierung überwiegend über den Unterboden-SCR-Katalysator 50 nicht mehr sichergestellt werden kann, kann sofort eine zusätzliche Reduktionsmittel-Dosierung über das motornahe Dosiermodul 36 erfolgen. Ein schneller Füllstandsaufbau auf dem ersten SCR-Katalysator 38 ist durch eine Überdosierung von Reduktionsmittel 74 möglich.

Über die Lebensdauer unterliegt der erste SCR-Katalysator 38, insbesondere ein Partikelfilter 42 mit einer Beschichtung 44 zur selektiven, katalytischen Reduktion von Stickoxiden aufgrund der motornäheren Anordnung und der regelmäßigen DPF-Regenerationen einer stärkeren Alterung als der Unterboden-SCR-Katalysator 50. Daher gilt für beide Strategien, dass auch der Grad der Alterung der SCR-Katalysatoren 38, 50 als Parameter berücksichtigt wird. Ein Wechsel zwischen den Dosierstrategien ist in Abhängigkeit von Betriebsmodi (zum Beispiel Kaltstart, DPF-Regeneration) und/oder des Alterungszustand der Abgasanlage 30 möglich. Dazu wird in einem ersten Verfahrensschritt <200> zumindest eine Temperatur in der Abgasanlage 30 des Verbrennungsmotors 10 ermittelt. In einem Verfahrensschritt <210> wird die ermittelte Temperatur mit einer Schwellentemperatur T_{S0} verglichen, und eine Eindosierung von Reduktionsmittel 74 unterbunden, wenn die Temperatur T unterhalb dieser Schwellentemperatur TS0 für den Reduktionsmitteleinsatz liegt. In einem Verfahrensschritt <220> wird der aktuelle Lastzustand des Verbrennungsmotors 10 ermittelt. Ferner wird in einem Verfahrensschritt <230> ein Beladungszustand der Ammoniak-Beladung der SCR-Katalysator 38, 50 ermittelt. In einem Verfahrensschritt <240> werden die möglichen Konvertierungsgrade des ersten und zweiten SCR-Katalysators 38, 50 in Abhängigkeit des Betriebspunkts des Verbrennungsmotors 10 anhand der im Steuergerät 90 hinterlegten Kennfelder ermittelt. In einem Verfahrensschritt <250> erfolgt in Abhängigkeit des Lastzustands eine Eindosierung von Reduktionsmittel 74 durch das erste Dosiermodul 36, das zweite Dosiermodul 48 oder beide Dosiermodule 36, 48.

Es ist von Vorteil, bei niedrigen Abgastemperaturen dauerhaft den Sollfüllstand von Ammoniak auf dem Unterboden-SCR-Katalysator 50 bereit zu halten. Dadurch können bei hoher Betriebsdynamik durch den ersten SCR-Katalysator 38 durchbrechende NOx-Emissionen gemindert werden. Im Falle einer schnellen Erwärmung des Unterboden-SCR-Katalysators 50 nimmt die Ammoniakspeicherkapazität des zweiten SCR-Katalysators 50 ab, sodass Ammoniakschlupf auftreten kann. Zur Vermeidung dieses Ammoniakschlupfs kann während der Erwärmung gezielt die motornahe Reduktionsmittel-Dosierung reduziert werden, um eine höhere NOx-Emission vor dem Unterboden-SCR-Katalysator 50 zuzulassen. Durch die SCR-Reaktion auf dem Unterboden-SCR-Katalysator 50 wird der Ammoniakfüllstand reduziert, sodass Ammoniakschlupf vermieden werden kann. Ferner können die Parameter der Verbrennung so verändert werden, dass erhöhte NOx-Rohemissionen zugelassen werden zum Beispiel durch die Reduzierung der Abgasrückführung. Diese Maßnahme gilt auch für die gezielte Reduzierung des Sollfüllstands auf dem ersten SCR-Katalysator 38.

Es kann eine vorausschauende Dosierung erfolgen. Eine Laständerung kann zum Beispiel durch eine Fahrpedaländerung erkannt werden kann. Sobald eine große Laständerung auftritt, die zu einer erhöhten NOx-Rohemissionen führt, kann vorausschauend der Sollfüllstand auf den maximalen möglichen Ammoniakfüllstand erhöht werden.

Auch für ein Kombisystem bestehend aus einem NOx-Speicherkatalysator 56, einem motornahen Partikelfilter 42 mit einer Beschichtung 44 zur selektiven, katalytischen Reduktion von Stickoxiden, einem SCR-Katalysator 50 in Unterbodenposition eines Kraftfahrzeuges oder einem NOX-Speicherkatalysator 56, einem motornahen Partikelfilter 42 mit einer Beschichtung 44 zur selektiven, katalytischen Reduktion von Stickoxiden, einem SCR-Katalysator 50 in Unterbodenposition eines Kraftfahrzeuges und einem Ammoniak-Sperrkatalysator sind die beschriebenen Dosierstrategien zur Eindosierung des Reduktionsmittels 74 möglich. Ergänzend wird in diesem Fall jedoch der Zeitpunkt der Regeneration des NOX-Speicherkatalysators 56 mittels motorischer Anfettung berücksichtigt. Bei Abgastemperaturen vor dem NOx-Speicherkatalysator 56 von weniger als 300°C, vorvorzugsweise von weniger als 250°C, sollte eine Regeneration erfolgen, wenn der NOx-Speicherkatalysator 56 gefüllt ist beziehungsweise ein zulässiger NOx-Durchbruch nach NOx-Speicherkatalysator 56 überschritten wird. Oberhalb dieser Temperatur wird auf eine Regeneration des NOx-Speicherkatalysators 56 verzichtet. Im Temperaturbereich mit aktiver NOx-Speicherkatalysator-Regeneration wird der Zeitpunkt der Regeneration in Abhängigkeit der katalytischen Aktivität des ersten SCR-Katalysators 38 und des zweiten SCR-Katalysators 50 gesetzt: Je aktiver die SCR-Abgasnachbehandlung desto mehr NOx-Durchbruch nach dem NOx-Speicherkatalysator 56 ist zulässig.

Zusammenfassend lässt sich festhalten, dass durch das vorgeschlagene Verfahren zur Abgasnachbehandlung eines Verbrennungsmotors 10 eine möglichst effiziente und effektive Umsetzung der Stickoxide bei einer Abgasanlage 30 mit zwei Dosiermodulen 38, 50 zur Eindosierung von Reduktionsmittel 74 zu ermöglicht wird.

### Bezugszeichenliste

- 10: Verbrennungsmotor
- 12: Einlass
- 14: Auslass
- 16: Hochdruckabgasrückführung
- 18: Abgasrückführungsventil
- 19: Brennräume

- 20: Luftversorgungssystem
- 22: Luftfilter
- 24: Verdichter
- 26: Ladeluftkühler
- 28: Drosselklappe
- 29: Frischluftkanal

- 30: Abgasanlage
- 32: Abgasturbolader
- 34: Turbine
- 36: erstes Dosiermodul
- 38: erster SCR-Katalysator

- 40: Katalysator
- 42: Partikelfilter
- 44: Beschichtung zur selektiven katalytischen Reduktion von Stickoxiden
- 46: Abgaskanal
- 48: zweites Dosiermodul

- 50: zweiter SCR-Katalysator
- 52: Abgasklappe
- 54: Diesel-Oxidationskatalysator
- 56: NOx-Speicherkatalysator
- 62: Verzweigungsstelle
- 64: erste Reduktionsmittelleitung
- 66: zweite Reduktionsmittelleitung

- 70: Fördermodul
- 72: Reduktionsmitteltank
- 74: Reduktionsmittel
- 76: Heizung
- 78: Temperatursensor

- 80: Niederdruckabgasrückführung
- 82: Abgaskühler
- 84: Abgasrückführungsventil
- 86: Einmündung
- 88: Abgasleitung

- 90: Steuergerät

- T: Temperatur
- T₁: erste Temperatur in der Abgasanlage
- T₂: zweite Temperatur in der Abgasanlage
- T_{EG}: Abgastemperatur
- T_{S0}: Schwellentemperatur für den Reduktionsmitteleinsatz
- T_{S1}: erste Schwellentemperatur
- T_{S2}: zweite Schwellentemperatur

## Patentansprüche

1. Verfahren zur Abgasnachbehandlung eines Verbrennungsmotors (10) mit einer Abgasanlage (30), in welcher in einer motornahen Position ein erster SCR-Katalysator (38) angeordnet ist, welchem ein erstes Dosiermodul (36) zur Eindosierung eines für die selektive katalytische Reduktion von Stickoxiden notwendigen Reduktionsmittels (74) zugeordnet ist, und in welcher in einer motorfernen Position stromabwärts des ersten SCR-Katalysators (38) ein zweiter SCR-Katalysator (50) angeordnet ist, dem ein zweites Dosiermodul (48) zugeordnet ist, umfassend folgende Schritte:
- Ermitteln oder Berechnen mindestens einer Temperatur (T) in der Abgasanlage (30) des Verbrennungsmotors (10),
- Ermitteln des Beladungszustands der Ammoniak-Beladung der SCR-Katalysatoren (38, 50),
- Eindosieren von Reduktionsmittel (74) durch das erste Dosiermodul (36) und/oder das zweite Dosiermodul (48) in Abhängigkeit der Ammoniakbeladung der SCR-Katalysatoren (38, 50) und der Temperatur in der Abgasanlage (30), wobei
- eine erste Dosierstrategie für das Reduktionsmittel (74) vorgesehen ist, bei der ein möglichst hoher Umsatz von Stickoxiden in molekularen Stickstoff durch den ersten SCR-Katalysator (38) vorgesehen ist, wobei in der ersten Dosierstrategie:
in einem ersten Betriebszustand des Verbrennungsmotors (10) bei niedrigen Motorlasten ausschließlich durch das erste Dosiermodul (36) stromaufwärts des ersten SCR-Katalysators (38) Reduktionsmittel (74) in den Abgaskanal eindosiert wird, wenn eine Ammoniaksollbeladung des ersten SCR-Katalysators (38) unterschritten wird,
in einem zweiten Betriebszustand des Verbrennungsmotors (10) sowohl durch das erste Dosiermodul (36) als auch durch das zweite Dosiermodul (48) derart Reduktionsmittel (74) eindosiert wird, dass beide SCR-Katalysatoren (38, 50) eine definierte Ammoniakbeladung erreichen,
in einem dritten Betriebszustand des Verbrennungsmotors (10) die Ammoniakbeladung des zweiten SCR-Katalysators (50) über das zweite Dosiermodul (48) geregelt wird, wobei
- eine Eindosierung des Reduktionsmittels (74) in Abhängigkeit des Wirkungsgrades des Reduktionsmitteleinsatzes festgelegt wird, derart, dass
- für den ersten SCR-Katalysator (38) und den zweiten SCR-Katalysator (50) jeweils Konvertierungsgrade in einem Kennfeld des Steuergeräts (90) des Verbrennungsmotors (10) abgelegt werden, die abhängig von einem NOx-Massenstrom im Abgas, der Abgastemperatur, der Raumgeschwindigkeit, des Alterungszustands des Katalysators und der eindosierten Reduktionsmittelmenge sind, und
- dass bei geöffnetem Niederdruck-Abgasrückführungsventil (84) gegenüber einem Betrieb mit geschlossenem Niederdruck-Abgasrückführungsventil (84) die Einspritzmenge des über das erste Dosiermodul (36) eindosierten Reduktionsmittels (74) reduziert wird.

2. Verfahren zur Abgasnachbehandlung nach Anspruch 1, **dadurch gekennzeichnet, dass** in einem Steuergerät (90) mindestens eine Dosierstrategie zur Eindosierung des Reduktionsmittels (74) abgelegt ist.

3. Verfahren zur Abgasnachbehandlung nach Anspruch 1, **dadurch gekennzeichnet, dass** die Ammoniaksollbeladung des ersten SCR-Katalysators (38) bei mindestens 50 % der möglichen Ammoniakbeladung des ersten SCR-Katalysators (38) liegt.

4. Verfahren zur Abgasnachbehandlung nach einem der Ansprüche 1 bis 3, **dadurch gekennzeichnet, dass** nur dann auf eine ausschließliche Eindosierung von Reduktionsmittel (74) durch das zweite Dosiermodul (48) umgeschaltet wird, wenn die Abgastemperatur (T_{EG}) oberhalb einer zweiten Schwellentemperatur (T_{S2}) liegt.

5. Verfahren zur Abgasnachbehandlung nach Anspruch 1, **dadurch gekennzeichnet, dass** auf eine Eindosierung von Reduktionsmittel (74) durch das erste Dosiermodul (36) verzichtet wird, wenn eine hinreichende Reduzierung der Stickoxide durch den zweiten SCR-Katalysator (50) sichergestellt ist.

6. Verfahren zur Abgasnachbehandlung nach einem der Ansprüche 1 bis 5, **dadurch gekennzeichnet, dass** basierend auf einer Änderung der Fahrpedalstellung eine vorausschauende Anpassung der Eindosierung von Reduktionsmittel (74) durch das erste Dosiermodul (36) und/oder das zweite Dosiermodul (48) erfolgt.

7. Vorrichtung zur Abgasnachbehandlung eines Verbrennungsmotors (10), der mit seinem Auslass (14) mit einer Abgasanlage (30) verbunden ist, wobei in der Abgasanlage (30) in einer motornahen Position ein erster SCR-Katalysator (38) angeordnet ist, dem ein erstes Dosiermodul (36) zur Eindosierung eines für die selektive katalytische Reduktion von Stickoxiden notwendigen Reduktionsmittels (74) zugeordnet ist, und wobei in der Abgasanlage (30) in einer motorfernen Position stromabwärts des ersten SCR-Katalysators (38) ein zweiter SCR-Katalysator (50) angeordnet ist, dem ein zweites Dosiermodul (48) zugeordnet ist, **dadurch gekennzeichnet, dass** der Vorrichtung ein Steuergerät (90) zur Steuerung der Einspritzmenge an Reduktionsmittel (74) zugeordnet ist, wobei das Steuergerät (90) dazu eingerichtet ist, ein Verfahren nach einem der Ansprüche 1 bis 6 durchzuführen, wenn ein maschinenlesbarer Programmcode auf dem Steuergerät (90) ausgeführt wird.

## Claims

1. Method for exhaust gas aftertreatment of an internal combustion engine (10) having an exhaust gas system (30), in which, in a position near the engine, a first SCR catalytic converter (38) is arranged, to which is assigned a first dosing module (36) for dosing a reducing agent (74) necessary for the selective catalytic reduction of nitrogen oxides, and in which, in a position remote from the engine, a second SCR catalytic converter (50) to which a second dosing module (48) is assigned is arranged downstream of the first SCR catalytic converter (38), comprising the following steps:
- determining or calculating at least one temperature (T) in the exhaust gas system (30) of the internal combustion engine (10),
- determining the load state of the ammonia load of the SCR catalytic converters (38, 50),
- dosing reducing agent (74) by the first dosing module (36) and/or the second dosing module (48) as a function of the ammonia load of the SCR catalytic converters (38, 50) and the temperature in the exhaust gas system (30), wherein
- a first dosing strategy for the reducing agent (74) is provided in which the greatest possible conversion of nitrogen oxides into molecular nitrogen is provided by the first SCR catalytic converter (38), wherein, in the first dosing strategy:
in a first operating state of the internal combustion engine (10) at low engine loads, reducing agent (74) is dosed into the exhaust gas channel exclusively by the first dosing module (36) upstream of the first SCR catalytic converter (38) if an ammonia target load of the first SCR catalytic converter (38) is undershot;
in a second operating state of the internal combustion engine (10), reducing agent (74) is dosed both by the first dosing module (36) and the second dosing module (48) in such a way that both SCR catalytic converters (38, 50) reach a defined ammonia load;
in a third operating state of the internal combustion engine (10), the ammonia load of the second SCR catalytic converter (50) is regulated via the second dosing module (48), wherein
- a dosing of the reducing agent (74) is determined as a function of the efficiency of the use of reducing agent such that,
- for the first SCR catalytic converter (38) and the second SCR catalytic converter (50), in each case, degrees of conversion are stored in a characteristic map of the control unit (90) of the internal combustion engine (10) which are dependent upon a NOx mass flow in the exhaust gas, the exhaust gas temperature, the spatial velocity, the degree of aging of the catalytic converter, and the dosed amount of reducing agent, and
- when the low-pressure exhaust gas recirculation valve (84) is open, the injected amount of the reducing agent (74) dosed via the first dosing module (36) is reduced, compared to operation when the low-pressure exhaust gas recirculation valve (84) is closed.

2. Method for exhaust gas aftertreatment according to claim 1, **characterized in that** at least one dosing strategy for dosing the reducing agent (74) is stored in a control unit (90).

3. Method for exhaust gas aftertreatment according to claim 1, **characterized in that** the target ammonia load of the first SCR catalytic converter (38) is at least 50% of the possible ammonia load of the first SCR catalytic converter (38).

4. Method for exhaust gas treatment according to one of claims 1 through 3, **characterized in that** switching to the exclusive dosing of reducing agent (74) by the second dosing module (48) occurs only if the exhaust gas temperature (T_{EG}) is above a second threshold temperature (T_{S2}).

5. Method for exhaust gas aftertreatment according to claim 1, **characterized in that** dosing of reducing agent (74) by the first dosing module (36) is dispensed with if sufficient reduction of the nitrogen oxides by the second SCR catalytic converter (50) is ensured.

6. Method for exhaust gas aftertreatment according to one of claims 1 through 5, **characterized in that**, based upon a change in the accelerator pedal position, a predictive adaptation of the dosing of reducing agent (74) by the first dosing module (36) and/or the second dosing module (48) takes place.

7. Device for the exhaust gas aftertreatment of an internal combustion engine (10) which is connected by its outlet (14) to an exhaust gas system (30), wherein, in the exhaust gas system (30) in a position close to the engine, a first SCR catalytic converter (38) is arranged, to which is assigned a first dosing module (36) for dosing a reducing agent (74) necessary for the selective catalytic reduction of nitrogen oxides, and wherein, in a position remote from the engine, a second SCR catalytic converter (50) to which a second dosing module (48) is associated is arranged downstream of the first SCR catalytic converter (38) in the exhaust gas system (30), **characterized in that** the device is associated with a control unit (90) for controlling the injected quantity of reducing agent (74), wherein the control unit (90) is configured to carry out a method according to one of claims 1 through 6 when a machine-readable program code is run on the control unit (90).

## Revendications

1. Procédé de traitement subséquent des gaz d'échappement d'un moteur à combustion interne (10) comprenant une installation de gaz d'échappement (30), dans laquelle, dans une position proche du moteur, est disposé un premier catalyseur SCR (38), auquel est associé un premier module de dosage (36) pour le dosage d'un agent réducteur (74) nécessaire pour la réduction catalytique sélective d'oxydes d'azote, et dans lequel, dans une position éloignée du moteur, en aval du premier catalyseur SCR (38) est disposé un deuxième catalyseur SCR (50), auquel est associé un deuxième module de dosage (48), comprenant les étapes suivantes :
- détermination ou calcul d'au moins une température (T) dans l'installation de gaz d'échappement (30) du moteur à combustion interne (10),
- détermination de l'état de charge de la charge d'ammoniac des catalyseurs SCR (38, 50),
- dosage d'agent réducteur (74) par le premier module de dosage (36) et/ou le deuxième module de dosage (48) en fonction de la charge d'ammoniac des catalyseurs SCR (38, 50) et de la température dans l'installation de gaz d'échappement (30),
- une première stratégie de dosage pour l'agent réducteur (74) étant prévue, dans laquelle une conversion aussi élevée que possible d'oxydes d'azote en azote moléculaire par le premier catalyseur SCR (38) est prévue, dans la première stratégie de dosage :
dans un premier état de fonctionnement du moteur à combustion interne (10) à faibles charges du moteur, de l'agent réducteur (74) étant dosé dans le canal de gaz d'échappement uniquement par le premier module de dosage (36) en amont du premier catalyseur SCR (38), lorsque une charge de consigne d'ammoniac du premier catalyseur SCR (38) n'est pas atteinte,
dans un deuxième état de fonctionnement du moteur à combustion interne (10) de l'agent réducteur (74) étant dosé tant par le premier module de dosage (36) que par le deuxième module de dosage (48) de telle façon que les deux catalyseurs SCR (38, 50) atteignent une charge d'ammoniac définie,
dans un troisième état de fonctionnement du moteur à combustion interne (10) la charge d'ammoniac du deuxième catalyseur SCR (50) étant réglée à travers le deuxième module de dosage (48),
- un dosage de l'agent réducteur (74) étant fixé en fonction du rendement de l'utilisation de l'agent réducteur, de telle façon que
- pour le premier catalyseur SCR (38) et le deuxième catalyseur SCR (50) respectivement des degrés de conversion sont enregistrés dans un champ de caractéristiques de l'appareil de commande (90) du moteur à combustion interne (10), lesquels dépendent d'un débit massique de NOx dans le gaz d'échappement, de la température du gaz d'échappement, de la vitesse spatiale, de l'état de vieillissement du catalyseur et de la quantité d'agent réducteur dosée, et
- que, lorsque la vanne de recirculation de gaz d'échappement à basse pression (84) est ouverte, la quantité d'injection de l'agent réducteur (74) dosé parle premier module de dosage (36) est réduite, comparé à la quantité lors d'un fonctionnement avec vanne de recirculation de gaz d'échappement (84) ouverte.

2. Procédé de traitement subséquent des gaz d'échappement selon la revendication 1, **caractérisé en ce que,** dans un appareil de commande (90), au moins une stratégie de dosage pour le dosage de l'agent réducteur (74) est enregistrée.

3. Procédé de traitement subséquent des gaz d'échappement selon la revendication 1, **caractérisé en ce que** la charge de consigne d'ammoniac du premier catalyseur (38) se situe à au moins 50 % de la charge d'ammoniac possible du premier catalyseur SCR (38).

4. Procédé de traitement subséquent des gaz d'échappement selon l'une quelconque des revendication 1 à 3, **caractérisé en ce que** la commutation à un dosage d'agent réducteur (74) exclusivement par le deuxième module de dosage (48) n'est effectuée que lorsque la température du gaz d'échappement (T_{EG}) est supérieure à une deuxième température de seuil (T_{S2}).

5. Procédé de traitement subséquent des gaz d'échappement selon la revendication 1, **caractérisé en ce qu'**il est renoncé à un dosage d'agent réducteur (74) par le premier module de dosage (36), lorsqu'une réduction suffisante des oxydes d'azote est assurée par le deuxième catalyseur SCR (50).

6. Procédé de traitement subséquent des gaz d'échappement selon l'une quelconque des revendications 1 à 5, **caractérisé en ce que,** sur la base d'une modification de la position de pédale d'accélérateur, une adaptation prévisionnelle du dosage d'agent réducteur (74) par le premier module de dosage (36) et/ou le deuxième module de dosage (48) est effectuée.

7. Dispositif de traitement subséquent des gaz d'échappement d'un moteur à combustion interne (10), lequel est connecté par sa sortie (14) à une installation de gaz d'échappement (30), dans l'installation de gaz d'échappement (30) un premier catalyseur SCR (38) étant disposé dans une position proche du moteur, auquel est associé un premier module de dosage (36) pour le dosage d'un agent réducteur (74) pour la réduction catalytique sélective d'oxydes d'azote, et dans l'installation de gaz d'échappement (30) un deuxième catalyseur SCR (50) étant disposé en aval du premier catalyseur SCR (38) dans une position éloignée du moteur, auquel un deuxième module de dosage (48) est associé, **caractérisé en ce qu'**un appareil de commande (90) pour la commande de la quantité d'injection d'agent réducteur (74) est associé au dispositif, l'appareil de commande (90) étant conçu pour exécuter un procédé selon l'une quelconque des revendications 1 à 6, lorsqu'un code de programme lisible par machine est exécuté sur l'appareil de commande (90).
